# EUROPEAN PATENT SPECIFICATION

(11) **EP 3 192 668 B1**
(45) Date of publication and mention of the grant of the patent: **31.07.2019**
(21) Application number: 15840047.3
(22) Date of filing: 21.08.2015
(51) Int. Cl.: B60C 5/00, B60C 5/01, B60C 19/00

(54) **PNEUMATIC TIRE**
LUFTREIFEN
PNEU

(30) Priority: 12.09.2014 JP 2014187023
(43) Date of publication of application: 19.07.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/073588
(87) International publication number: WO 2016/039119

(56) References cited:
- WO-A1-2014/129427
- JP-A- 2005 212 524
- JP-A- 2007 152 789
- JP-A- 2007 168 242
- JP-A- 2008 296 749
- JP-A- 2009 298 120
- JP-A- 2010 069 828
- JP-A- 2012 071 601
- JP-A- 2014 144 774
- JP-A- 2014 151 875

## Description

### Technical Field

The present invention relates to a pneumatic tire.

### Background Art

Patent Document 1 below describes a resin pneumatic tire in which a tire frame member is formed from a resin material, and a rubber tread is provided at an outer circumferential surface of the tire frame member.

Patent Document 1: Japanese Patent Application Laid-Open (JP-A) No. H03-143701.

Document JP2014-144774A shows a method for manufacturing a pneumatic tire comprising a resin tire frame member.
Document JP2007-152789A shows a method for manufacturing a pneumatic tire comprising a noise absorbing member where buffing is applied to the inner surface of the tire prior to application of an adhesive required for attachment of said member to said surface.

### SUMMARY OF INVENTION

### Technical Problem

The resin pneumatic tire described above attempts to reduce cavity resonance noise by suppressing vibration of internal air caused by unevenness of a road surface during vehicle travel.

In consideration of the above circumstances, an object of the present invention is to obtain a resin pneumatic tire capable of reducing cavity resonance noise.

### Solution to Problem

The invention is defined by a method as laid down in claim 1 for manufacturing a tire. A preferred embodiment is defined in dependent claim 2.

In a pneumatic tire, the tire frame member is made from a resin. The sound-absorbing material is provided at the adhesion region of the inner circumferential surface of the tire frame member through the adhesive. The sound-absorbing material is capable of absorbing sound.

The tire frame member is made from a resin, enabling the adhesive to adhere to the adhesion region of the inner circumferential surface. Thus, the sound-absorbing material can be adhered to the adhesion region through the adhesive, enabling cavity resonance noise to be reduced by the sound-absorbing material.

A pneumatic tire according to another aspect, wettability of the adhesion region to the adhesive is raised in comparison to wettability of a region of an inner circumferential surface of the tire frame member other than the adhesion region to the adhesive.

In the pneumatic tire according to said aspect, the wettability of the adhesion region are raised, enabling the adhesion force between the adhesive region and the adhesive to be improved. Accordingly, the sound-absorbing material can be strongly adhered to the inner circumferential surface of the tire frame member.

A pneumatic tire according to another aspect of the present invention, a release agent is not applied to the adhesion region.

In the pneumatic tire according to said aspect, the tire frame member is made from a resin, and a release agent is not applied to the adhesion region. However, for example, in rubber pneumatic tires, a release agent is applied to suppress a bladder from sticking to an inner circumferential surface during vulcanization, and so a reduction in the adhesion force between the inner circumferential surface and an adhesive is suppressed by removing the release agent before providing the adhesive. However, the bladder employed during vulcanization is made from, for example, butyl rubber. Accordingly, the inner circumferential surface of the tire frame member and the bladder will not readily stick to each other, and there is no longer a need for release agent to be applied. In this manner, release agent is not applied to the resin tire frame member, enabling the adhesion force between the adhesion region and the adhesive to be improved. Further, a process to apply the release agent, and a process to remove the applied release agent are eliminated, enabling the productivity of the pneumatic tire to be improved.

In the pneumatic tire according to the present invention, the adhesion region has a roughened surface.

The adhesion region is subjected to surface roughening, enabling the adhesion surface area between the adhesion region and the adhesive to be increased. Accordingly, the adhesion force between the adhesion region and the adhesive can be further improved.

In the pneumatic tire according to the present invention, the adhesion region has a roughened surface formed by transferring a rough surface profile formed at a resin-molding mold for the tire frame member, to the adhesion region.

In the pneumatic tire according to the invention, the rough surface profile formed at the resin-molding mold for the tire frame member is transferred in order to roughen the surface of the adhesion region. Accordingly, the adhesion region is subjected to surface roughening at the stage of molding the tire frame member using the resin-molding mold, enabling the surface of the adhesion region to be easily roughened.

### Advantageous Effects of Invention

The present invention has the excellent advantageous effect that a resin pneumatic tire capable of reducing cavity resonance noise can be obtained.

### BRIEF DESCRIPTION OF DRAWINGS

Fig. 1 is a cross-section as viewed along a radial direction, illustrating overall configuration of a pneumatic tire according to a first example not according to the invention in a state fitted onto a wheel.
Fig. 2 is an enlarged perspective view illustrating an upper side cross-section portion of the pneumatic tire illustrated in Fig. 1.
Fig. 3 is an exploded perspective view of the pneumatic tire illustrated in Fig. 2.
Fig. 4 is an enlarged cross-section as viewed along a radial direction of relevant portions of a pneumatic tire during buffing.
Fig. 5 is an enlarged cross-section as viewed along a radial direction of relevant portions of a pneumatic tire according to a second example not according to the invention during blasting.
Fig. 6 is an enlarged cross-section as viewed along a radial direction of relevant portions of a pneumatic tire according to a first exemplary embodiment of the present invention during molding of a tire frame member.

### DESCRIPTION OF EMBODIMENTS

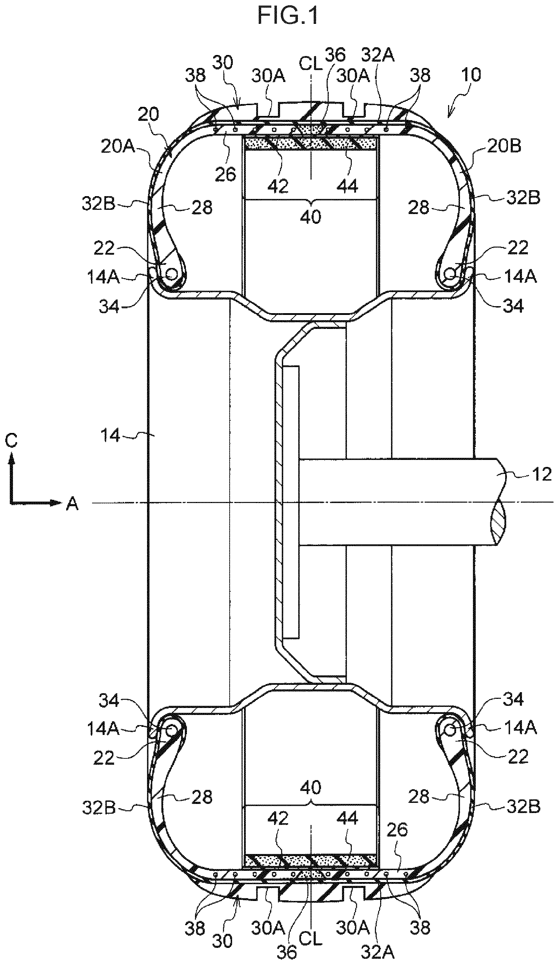

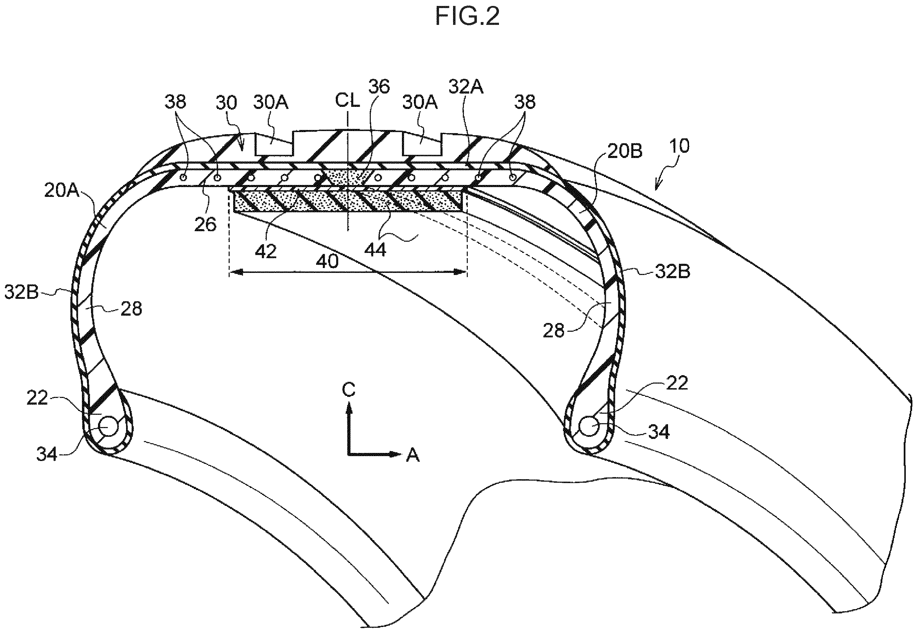

Explanation follows regarding a pneumatic tire according to exemplary embodiments of the present invention, with reference to Fig. 1 to Fig. 6. Note that in the drawings, the letter A indicates a tire axial direction as appropriate. The tire axial direction A corresponds to a vehicle width direction of a vehicle fitted with the pneumatic tire. The letter C indicates a tire radial direction.

### First Example

Explanation follows regarding a pneumatic tire according to a first example not according to the invention, with reference to Fig. 1 to Fig. 4. As illustrated in Fig. 1, a pneumatic tire 10 according to the first example is assembled to rims 14A of a wheel 14 attached to an end portion of an axle 12 of a vehicle, not illustrated in the drawings. The pneumatic tire 10 includes a resin tire frame member 20 having a toroidal shape spanning between one bead portion 22 on the vehicle width direction outside of the pneumatic tire 10, and another bead portion 22 on the vehicle width direction inside of the pneumatic tire 10. A tread layer 30 is provided at an outer circumferential surface of the tire frame member 20. Side covering layers 32B are provided at outside faces of the tire frame member 20. Moreover, the pneumatic tire 10 is provided with an adhesive 42 at an adhesion region 40 of an inner circumferential surface of the tire frame member 20, and a sound-absorbing material 44 that is capable of absorbing sound is provided at the adhesion region 40 through the adhesive 42.

### Tire Frame Member Configuration

As illustrated in Fig. 1 to Fig. 3, the tire frame member 20 of the first example is molded by injection molding a resin material. More specifically, the structure of tire frame member 20 includes a crown portion 26, side wall portions 28, and the bead portions 22. The crown portion 26 is provided at the outer circumferential surface of the tire frame member 20. The side wall portions 28 respectively extend from both tire axial direction edges of the crown portion 26 toward the tire radial direction inside, and are formed integrally to the crown portion 26. The bead portions 22 are respectively provided at the tire radial direction inside of the respective side wall portions 28, and are formed integrally to the respective side wall portions 28.

A bead core 34 is embedded in each of the bead portions 22. The bead cores 34 may employ metal bead cores, organic fiber bead cores, resin bead cores in which an organic fiber material is covered by a resin material, hard resin bead cores, or the like. Note that the bead cores 34 may be omitted in cases in which the rigidity of the bead portions 22 is secured and the bead portions 22 are fitted to the rims 14A of the wheel 14 in an appropriate manner (see Fig. 1).

Resin materials such as a thermoplastic resin having rubber-like elasticity, a thermoplastic elastomer (TPE), or a thermosetting resin may be employed as resin materials. A thermoplastic elastomer is well-suited as the resin material in consideration of its elasticity during travel and its molding properties during manufacture.

Thermoplastic amide-based elastomers (TPA), thermoplastic ester-based elastomers (TPC), thermoplastic olefin-based elastomers (TPO), thermoplastic styrene-based elastomers (TPS), thermoplastic urethane-based elastomers (TPU), thermoplastic cross-linked rubbers (TPV), or other thermoplastic elastomers (TPZ), as defined in JIS K6418 (Japan Industrial Standards), may be employed as thermoplastic elastomers.

Moreover, in cases in which a thermoplastic resin is employed as the resin material, urethane resins, olefin resins, vinyl chloride resins, polyamide resins and the like may be employed as the thermoplastic resin. More specifically, a thermoplastic resin having the characteristics of a deflection temperature under load (when loaded at 0.45 MPa) as defined by ISO 75-2 (International Organization for Standardization) or ASTM D648 (American Association for Testing Materials) of 78°C or greater, a tensile yield strength, tensile yield elongation, and tensile elongation at break, as defined by JIS K7113, of 10 MPa or greater, 10% or greater, and 50% or greater respectively, and with a Vicat softening temperature, as defined by JIS K7206 (method A), of 130°C or greater, is well-suited for use.

In the first example, the tire frame member 20 includes half-frame members 20A, 20B molded as left-right halves symmetrical about a tire width direction central portion, namely about a tire equatorial plane CL or a plane in the vicinity thereof, of the pneumatic tire 10. Tire width direction center side edges of the crown portions 26 of the respective half-frame members 20A, 20B are bonded together to configure the tire frame member 20. A bonding material 36 is employed in bonding. A welding method in which a resin material of the same type or a different type to that of the tire frame member 20 is employed as the bonding material 36 may be employed when bonding. Moreover, a hot-plate welding method in which a hot plate is inserted between edges of the crown portion 26, and the hot plate is removed whilst pressing the edges in directions toward each other to bond together the edges that are in a molten state, may also be employed when bonding. In such cases, resin material that has melted and then hardened configures the bonding material 36. Moreover, an adhesive may be employed for some of the bonding material 36 in combination with the welding method or the hot-plate welding method described above.

A reinforcing cord 38 is provided wound around the crown portion 26 in a spiral shape, for example. A steel cord, a monofilament (single strand) formed from a metal fiber or an organic fiber, or a multifilament (twisted strands) configured by twisting such fibers together, may be employed as the cord 38. When a steel cord is employed, sheet shaped thermoplastic resin material is adhered to a tire radial direction outside of the crown portion 26, and the steel cord is embedded in the thermoplastic resin material while being heated. Note that the thermoplastic resin material may be heated as well as heating the steel cord.

Providing the cord 38 to the crown portion 26 enables the tire circumferential direction rigidity of the crown portion 26 to be improved, and also enables the fracture resistance of the crown portion 26 to be improved. This also enables the puncture resistance of the crown portion 26 of the pneumatic tire 10 to be raised. Note that the cord 38 may be provided intermittently in the tire width direction. Moreover, further reinforcing material may be provided to at least one location out of the bead portions 22, the crown portion 26, and the side wall portions 28 of the tire frame member 20 in order to reinforce the tire frame member 20. Practically, a polymer material, a metal fiber material, a cord material, a nonwoven fabric material, a woven fabric material, or the like may be employed as a reinforcing material.

### Tread Layer Configuration

The tread layer 30 is provided at an outer circumferential surface of the tire frame member 20, with cushioning rubber 32A interposed therebetween. In the first example, rubber similar to that employed in the tread rubber of general rubber pneumatic tires, or similar to the tread rubber employed in recycled tires, is employed for the tread layer 30. Moreover, the cushioning rubber 32A may employ cushioning rubber similar to cushioning rubber in precured (cold) recycled tires adhered with vulcanized rubber molded with a tread face in advance. Note that the tread face of the tread layer 30 is formed with water-repelling grooves 30A, similarly to a general rubber pneumatic tire. Moreover, the tread pattern of the tread layer 30 is not particularly limited, and a known tread pattern may be employed.

### Side Covering Layer Configuration

The side covering layers 32B are formed from rubber similar to rubber employed in the side wall portions and bead portions of a general rubber pneumatic tire. In the first example, the respective side covering layers 32B are formed continuously from both tire width direction edges of the tread layer 30 along outer faces of the side wall portions 28, outer faces of the bead portions 22, and inner faces of the bead portions 22.

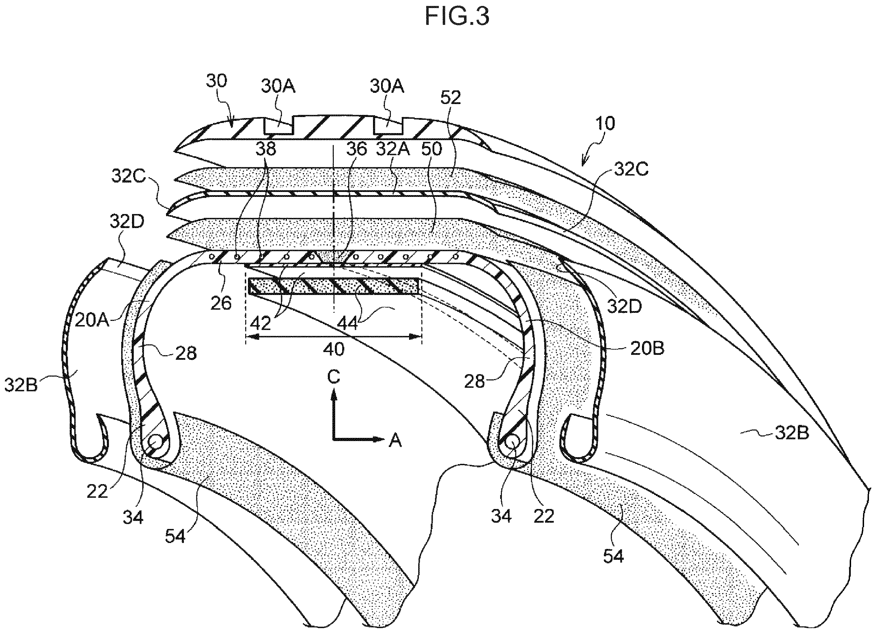

The thickness of the side covering layers 32B is set to substantially the same thickness as that of the cushioning rubber 32A. Moreover, as illustrated in Fig. 3, an edge on the cushioning rubber 32A side of each side covering layer 32B is provided with a tapering-shaped bonding portion 32D, and edges of the cushioning rubber 32A on the side covering layer 32B sides are provided with tapering-shaped bonding portions 32C. The tapering shape increases the bonding surface area over which the bonding portion 32C and the bonding portion 32D are bonded together.

In the pneumatic tire 10 of the first example, the entire outer face of the tire frame member 20 is completely covered by the cushioning rubber 32A and the side covering layers 32B, namely is completely covered by vulcanized rubber.

### Adhesive and Sound-Absorbing Material Configuration

As illustrated in Fig. 1 to Fig. 3, the adhesion region 40 is provided at the inner circumferential surface of the tire frame member 20. In the first example, the adhesion region 40 configures a tire axial direction central portion of the crown portion 26 around an entire circumferential direction inner face thereof, and is a location where the surface of the resin material of the tire frame member 20 is exposed. The adhesion region 40 may configure the entire tire radial direction region from an inner face of the crown portion 26 to inner faces of the respective bead portions 22, or may configure the inner faces of the side wall portions 28 and inner faces of the bead portions 22 and exclude the inner face of the crown portion 26. Further, the adhesion region 40 may be provided separated at uniform spacings in the circumferential direction. In other words, as long as the adhesion region 40 is a location where the inner face of the tire frame member 20 is directly exposed, there are no particular limitations to the location of the adhesion region 40.

The adhesive 42 is provided at substantially the entirety of the adhesion region 40. The adhesive 42 is preferably synthetic rubber-based, for example a solution type in which a synthetic rubber is dissolved in an organic solvent, or a latex type dispersed in water. In particular, chloroprene-based solution type adhesives employing chloroprene rubber have excellent adhesive force, and are flexible and strong with respect to bending, impact, and the like, and are therefore particularly preferable as the synthetic rubber. Cyclohexane (alicyclic-based), acetone (ketone-based), hexane (aliphatic-based), and mixtures thereof are preferable organic solvents from perspectives such as solubility, workability, cost, and impact on the work environment. Note that in this case, the chloroprene rubber content is preferably from 25 to 35 parts by weight out of a total of 100 parts by weight of the synthetic rubber-based adhesive. Below 25 parts by weight there is a tendency for detriment to adhesion strength, and above 35 parts by weight there is a tendency for viscosity to become high, making coating difficult. In the first example, a thermoplastic elastomer is employed as the resin material of the tire frame member 20. In cases in which a spongey material, described later, is employed as the sound-absorbing material 44, a synthetic rubber-based adhesive is preferably employed as the adhesive 42.

The wettability of the adhesion region 40 to the adhesive 42 are raised in comparison to the wettability of a region of an inner circumferential surface of the tire frame member other than the adhesion region 40 to the adhesive 42. To explain in detail, first, the adhesion region 40 is not applied with a release agent (inner face liquid layer) such as silicon that is used during vulcanization and which reduces the adhesion force between the adhesion region 40 and the adhesive 42. This is since the tire frame member 20 is made from a resin, and a bladder employed during vulcanization is generally made from butyl rubber, and so the bladder is not liable to stick to the inner circumferential surface of the tire frame member 20, rendering a release agent unnecessary. Further, a release agent is not necessary when the tread rubber side of the tire frame member is covered with an envelope to configure a temporary assembly and then vulcanized. A release agent is thus not necessary at the inner circumferential surface of the tire frame member 20.

Second, in the first example, the adhesion region 40 is subjected to surface roughening. By subjecting the adhesion region 40 to surface roughening, an outermost surface of the adhesion region 40 is removed, the surface of the adhesion region 40 is modified, and the adhesion surface area of the adhesion region 40 is increased due to the unevenness. An arithmetic roughness average (Ra) of the surface roughness of the inner circumferential surface of the adhesion region 40 due to surface roughening is preferably set to 0.05 mm or greater.

The sound-absorbing material 44 is configured in a belt shape or a tube shape, having a uniform width in the tire axial direction, and with its length direction extending along the inner circumferential surface of the tire frame member 20. The sound-absorbing material 44 is adhered to the adhesion region 40 through the adhesive 42. The sound-absorbing material 44 has a spongiform porous structure. What is referred to as a spongey material, obtained by foaming a material such as a rubber or a synthetic resin, is employed as the sound-absorbing material 44. In the first example, the spongey material may employ an open-cell foam type or a closed-cell foam (independent cell foam) type. Moreover, the spongey material may be integrally formed with at least one of an animal fiber, a plant fiber, or a synthetic fiber entangled with the above material. The sound-absorbing material 44 employed in the present exemplary embodiment effectively converts sound energy into heat energy, thereby damping sound. Moreover, the sound-absorbing material 44 has excellent vibration damping properties. Note that the thickness of the sound-absorbing material 44 is set from 10 mm to 10 cm. Note that in the present exemplary embodiment, the sound-absorbing material 44 may include a material having excellent sound reflectivity, such as a glass wool material, a felt material, or a foamed rubber material.

### Pneumatic Tire Manufacturing Method

Simple explanation follows regarding a manufacturing method of the pneumatic tire 10 according to the first example, with reference to Fig. 1 to Fig. 4.

First, the resin tire frame member 20 illustrated in Fig. 3, the tread layer 30 in a vulcanized or semi-vulcanized state, and the side covering layers 32B in a vulcanized or semi-vulcanized state are molded in advance. Note that the side covering layers 32B are molded in shapes corresponding to affixing locations on the tire frame member 20.

The unvulcanized rubber cushioning rubber 32A is disposed at the outer circumferential surface of the tire frame member 20, and the tread layer 30 is disposed at the tire radial direction outside of the cushioning rubber 32A. The tread layer 30 is belt shaped, and the tread layer 30 is wrapped onto the outer circumference of the cushioning rubber 32A in an annular shape. Alternatively, the tread layer 30 may be formed in an annular shape in advance, and the tread layer 30 may be fitted onto the outer circumference of the cushioning rubber 32A. A tread pattern is provided on a front face of the tread layer 30.

Note that as illustrated in Fig. 3, the cushioning rubber 32A is adhered to the outer circumferential surface of the tire frame member 20 through an adhesive 50, and similarly, the tread layer 30 is adhered to the outer circumference of the cushioning rubber 32A through an adhesive 52. In the first example, a triazine thiol-based adhesive is employed for the adhesives 50, 52. These adhesives are coated under an atmosphere of 70% humidity or lower. Alternatively, a chlorinated rubber-based adhesive, a phenol resin-based adhesive, an isocyanate-based adhesive, a halogenated rubber-based adhesive, or the like may be employed for the adhesives 50, 52.

The outer circumferential surface of the tire frame member 20 is buffed prior to coating with the adhesive 50, and similarly, the front face of the cushioning rubber 32A is buffed prior to coating with the adhesive 52. The buffing is processing to at least partially remove an outermost surface using sandpaper, a grinder, or the like. Buffing increases the adhesion force of the adhesive 50 to the outer circumferential surface of the tire frame member 20, and increases the adhesion force of the adhesive 52 to the front face of the cushioning rubber 32A. Moreover, after buffing, the outer circumferential surface of the tire frame member 20 and the front face of the cushioning rubber 32A are preferably respectively de-greased by washing with an alcohol solution or the like. Moreover, after buffing, the outer circumferential surface of the tire frame member 20 and the front face of the cushioning rubber 32A are preferably respectively subjected to surface modification such as corona discharge treatment or ultraviolet irradiation treatment. Such treatment enables the adhesion force to be increased.

A tacky material such as a rubber cement composition is preferably coated onto a back face of the tread layer 30 and/or the front face of the cushioning rubber 32A in advance. The tacky material can be used in a temporary fixing operation, enabling the task to be made easier. In cases in which styrene-butadiene rubber (SBR) is employed for the tread layer 30, an SBR-based splice cement is employed as the rubber cement composition. In cases in which an SBR-based rubber with a high natural rubber (NR) content is employed for the tread layer 30, an SBR-based splice cement containing butadiene rubber (BR) is employed as the rubber cement composition. Moreover, a solvent-free cement containing an elastomer in liquid form such as liquid BR or the like, a cement with a main component of a blend of isoprene rubber (IR) rubber and SBR, or the like may be employed as the rubber cement composition.

Next, as illustrated in Fig. 3, the side covering layers 32B are disposed at outside faces of the tire frame member 20 (outer faces of the side wall portions 28 and the bead portions 22). The side covering layers 32B are adhered to the outside face of the tire frame member 20 through an adhesive 54 (or a rubber cement composition). Prior to coating with the adhesive 54, the outside face of the tire frame member 20 or back faces of the side covering layers 32B are subjected to buffing and the like, similarly to as described above. Note that symbols, text, numbers, and the like indicating the name of the maker, product name, tire size, and the like are provided on an outer face of the side covering layers 32B.

The entire outer face of the tire frame member 20 on which the tread layer 30 and the side covering layers 32B are disposed is covered by an envelope, not illustrated in the drawings, and the tire frame member 20 is assembled to a pair of annular support members with a structure similar to that of a rim so as to form a temporary assembly. Tire radial direction inside edges of the envelope are sandwiched between the bead portions 22 and flanges of the support members. Moreover, the grooves 30A of the tread layer 30 are temporarily filled in with a pressed-on material formed from an elastic body of rubber or the like. The pressed-on material is removed after vulcanization. The envelope is a covering member made from rubber, and is airtight and elasticated, as well as being thermally and chemically stable, and has appropriate strength. In the first example, butyl rubber is employed for the envelope. The envelope is provided with a valve, not illustrated in the drawings, and the valve is configured connected to a vacuum device, not illustrated in the drawings. The vacuum device creates a vacuum inside the envelope, such that the envelope creates a force pressing the tread layer 30 and the side covering layers 32B toward the tire frame member 20 side.

Next, the temporary assembly is transported into a vulcanizing apparatus, not illustrated in the drawings. The temporary assembly is applied with heat and pressure inside the vulcanizing apparatus, thereby vulcanizing the temporary assembly. The temporary assembly configures a substantially completed pneumatic tire 10 when vulcanized. Following vulcanization, the envelope and the support members are removed.

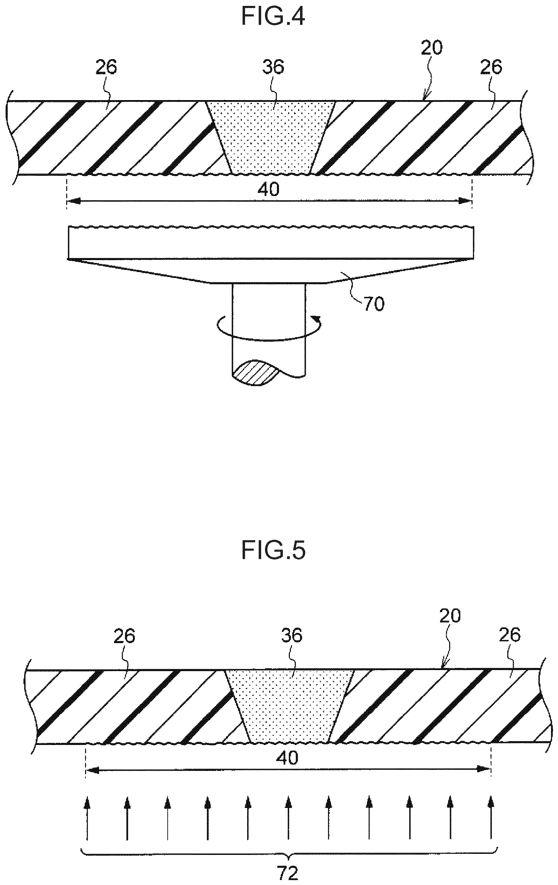

Next, as illustrated in Fig. 4, in the pneumatic tire 10, the adhesion region 40 of the inner circumferential surface of the tire frame member 20 is buffed so as to roughen the surface of the adhesion region 40. During buffing, as described above, a buffing tool 70 such as sandpaper or a grinder is employed to at least partially remove an outermost surface of the adhesion region 40. The surface-roughened adhesion region 40 may be subjected to at least one process out of degreasing, corona discharge treatment, ultraviolet irradiation treatment, or the like, as mentioned above. Such processing enables the wettability of the adhesion region 40 to be even further increased.

Next, as illustrated in Fig. 1 to Fig. 3, the adhesive 42 is formed on the adhesion region 40, and then the sound-absorbing material 44 is adhered to the adhesion region 40 through the adhesive 42. The pneumatic tire 10 of the first example is thereby completed.

### Operation and Advantageous Effects of the First Example

As illustrated in Fig. 1 to Fig. 3, in the pneumatic tire 10 according to the first example, the tire frame member 20 is made from a resin. The sound-absorbing material 44 is provided at the adhesion region 40 of the inner circumferential surface of the tire frame member 20 through the adhesive 42. The sound-absorbing material 44 is capable of absorbing sound.

The tire frame member 20 is made from a resin, so the adhesive 42 can be made to adhere directly to the adhesion region 40 of the inner circumferential surface. Although not illustrated in the drawings, in rubber pneumatic tires, a release agent is applied so as to suppress a bladder from sticking to the inner circumferential surface during vulcanization, and remove the release agent before form the adhesive, so a reduction in the adhesion force between the inner circumferential surface and an adhesive is suppressed. In the resin pneumatic tire 10, the sound-absorbing material 44 is easily adhered through the adhesive 42 directly adhered to the adhesion region 40 of the inner circumferential surface, and the sound-absorbing material 44 is capable of reducing cavity resonance noise. By reducing cavity resonance noise, the quietness of the pneumatic tire 10 during vehicle travel can be improved.

In the pneumatic tire 10 according to the first example, the wettability of the adhesion region 40 are increased, so the adhesion force between the adhesion region 40 and the adhesive 42 can be improved. Thus, the sound-absorbing material 44 can be strongly adhered to the inner circumferential surface of the tire frame member 20.

Further, in the pneumatic tire 10 according to the first example, as illustrated in Fig. 1 to Fig. 3, the tire frame member 20 is made from a resin. Furthermore, a bladder employed during vulcanization is, for example, made from butyl rubber. Thus, the inner circumferential surface of the tire frame member 20 and the bladder are not liable to stick together, and the need to apply a release agent is eliminated. Accordingly, the adhesion region 40 is not applied with a release agent in vulcanization, enabling the adhesion force between the adhesion region 40 and the adhesive 42 to be improved. Further, a process to apply a release agent, and a process to remove the release agent are eliminated, enabling the productivity of the pneumatic tire 10 to be improved.

Further, in the pneumatic tire 10 according to the first example, as illustrated in Fig. 4, the adhesion region 40 is subjected to surface roughening, enabling the adhesion surface area between the adhesion region 40 and the adhesive 42 to be increased. This thereby enables the adhesion force between the adhesion region 40 and the adhesive 42 to be further improved.

Further, in the pneumatic tire 10 according to the first example, as illustrated in Fig. 4, the adhesion region 40 is subjected to surface roughening by buffing. Accordingly, the surface layer of the adhesion region 40 is removed, and then the adhesive 42 is adhered, thereby enabling the adhesion force between the adhesion region 40 and the adhesive to be further improved.

### Second Example

Explanation follows regarding a pneumatic tire according to a second example not according to the invention, with reference to Fig. 5. Note that in the present exemplary embodiment, and in a third exemplary embodiment, described later, configuration elements the same as or equivalent to configuration elements of the pneumatic tire 10 according to the first example described above are allocated the same reference numerals, and duplicate explanation thereof is omitted.

In the pneumatic tire 10 according to the second example, the adhesion region 40 of the inner circumferential surface of the tire frame member 20 after vulcanization is subject to surface roughening similarly to the adhesion region 40 of the pneumatic tire 10 according to the first example. As illustrated in Fig. 5, surface roughening is performed by blasting. Blasting employs compressed air to cause particulate bodies 72 (simply indicated by the arrows) serving as projectile material to collide with the adhesion region 40, and thereby modify the surface of the adhesion region 40. Hard particulate bodies such as metal particles, ceramic particles, glass particles, and plastic particles can be practically employed as the particulate bodies 72.

The pneumatic tire 10 according to the second example is capable of obtaining similar operation and advantageous effects to the operation and advantageous effects obtained by the pneumatic tire 10 according to the first example described above. Further, in the pneumatic tire 10 according to the second example, as illustrated in Fig. 5, the adhesion region 40 is subjected to surface roughening by blasting. Accordingly, the surface layer of the adhesion region 40 is removed, and then the adhesive 42 is adhered, thereby enabling the adhesion force between the adhesion region 40 and the adhesive 42 to be further improved.

### First Exemplary Embodiment

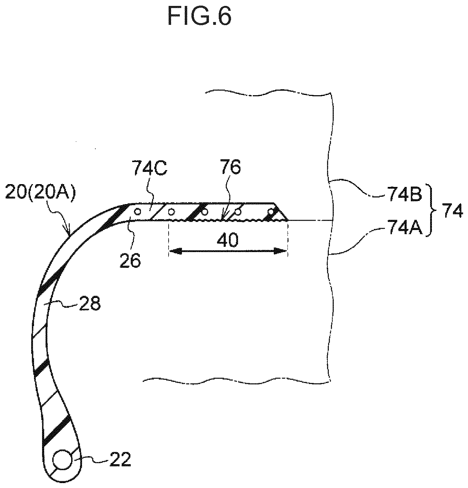

Explanation follows regarding a pneumatic tire according to a first exemplary embodiment of the present invention, with reference to Fig. 6. In the pneumatic tire 10 according to the present exemplary embodiment, the adhesion region 40 of the inner circumferential surface of the tire frame member 20 is subjected to surface roughening similarly to the adhesion region 40 of the pneumatic tire 10 of the first exemplary embodiment or the second exemplary embodiment.

As illustrated in Fig. 6, the surface of the adhesion region 40 is roughened by transferring a rough surface profile 76 formed to a resin-molding mold 74 for the tire frame member 20 during molding of the tire frame member 20. The resin-molding mold 74 includes a first mold 74A that molds the inner circumferential surface side of the tire frame member 20, and a second mold 74B that molds the outer circumferential surface side of the tire frame member 20. The tire frame member 20 is molded within a cavity 74C formed by the first mold 74A and the second mold 74B. The rough surface profile 76 is configured with a bumpy profile formed to the cavity 74C side of the first mold 74A.

The pneumatic tire 10 according to the present exemplary embodiment is capable of obtaining similar operation and advantageous effects to the operation and advantageous effects obtained by the pneumatic tire 10 according to the first example. In the pneumatic tire 10 according to the present exemplary embodiment, the surface of the adhesion region 40 is roughened by transferring the rough surface profile 76 formed to the resin-molding mold 74 for the tire frame member 20. Thus, the adhesion region 40 is subjected to surface roughening at the stage of molding the tire frame member 20 using the resin-molding mold 74, enabling the surface of the adhesion region 40 to be easily roughened.

### Other Exemplary Embodiments

The present invention had been explained based on the above described exemplary embodiments. However the present invention is not limited to the above described exemplary embodiments, and various modifications may be implemented without departing from the scope of the claims.

- 10: pneumatic tire
- 20: tire frame member
- 22: bead portion
- 26: crown portion
- 28: side wall portion
- 30: tread layer
- 32A: cushioning rubber
- 32B: side covering layer
- 40: adhesion region
- 42: adhesive
- 44: sound-absorbing material
- 70: buffing tool
- 72: particulate body
- 74: resin-molding mold
- 76: rough surface profile

## Claims

1. A method of manufacturing a pneumatic tire (10) comprising:
providing an adhesive (42) at an adhesion region (40) of an inner circumferential surface of a tire frame member (20) that is made from a resin;
adhering a sound-absorbing material (44) capable of absorbing sound to the adhesive (42); and
roughening a surface of the adhesion region (40) to raise wettability of the adhesion region (40) to the adhesive (42) in comparison to wettability of a region of an inner circumferential surface of the tire frame member (20) other than the adhesion region (40) to the adhesive (42), by transferring a rough surface profile (76) formed at a resin-molding mold (74) for the tire frame member (20), to the adhesion region (40).

2. The method of claim 1 of manufacturing a pneumatic tire (10), wherein a release agent is not applied to the adhesion region (40).

## Patentansprüche

1. Verfahren zur Herstellung eines Luftreifens (10), umfassend:
Bereitstellen eines Klebstoffs (42) an einem Klebebereich (40) einer inneren Umfangsfläche eines Reifenrahmenelements (20), das aus einem Harz hergestellt ist;
Kleben eines schallabsorbierenden Materials (44), das in der Lage ist, Schall an dem Klebstoff (42) zu absorbieren; und
Aufrauen einer Oberfläche des Klebebereichs (40), um die Benetzbarkeit des Klebebereichs (40) zum Klebstoff (42) im Vergleich zur Benetzbarkeit eines Bereichs einer inneren Umfangsfläche des Reifenrahmenelements (20), welche verschieden vom Klebebereich (40) ist, zum Klebstoff (42) zu erhöhen, durch Übertragen eines an einer Harzgussform (74) für das Reifenrahmenelement (20) ausgebildeten rauen Oberflächenprofils (76) auf den Klebebereich (40).

2. Verfahren nach Anspruch 1 zur Herstellung eines Luftreifens (10), wobei ein Trennmittel nicht auf den Klebebereich (40) aufgebracht wird.

## Revendications

1. Procédé de fabrication d'un bandage pneumatique (10) comprenant:
fournir un adhésif (42) au niveau d'une région d'adhésion (40) d'une surface circonférentielle interne d'un élément de cadre de pneu (20) qui est fabriqué à partir d'une résine;
faire adhérer un matériau absorbant le son (44), capable d'absorber le son sur l'adhésif (42); et
rendre rugueuse une surface de la région d'adhésion (40) pour augmenter la mouillabilité de la région d'adhésion (40) sur l'adhésif (42) par rapport à la mouillabilité d'une région de la surface circonférentielle intérieure de l'élément de cadre de pneu (20) autre que la région d'adhésion (40) à l'adhésif (42), en transférant un profil de surface rugueuse (76) formé dans un moule de moulage de résine (74) pour l'élément de cadre de bandage (20), vers la région d'adhésion (40).

2. Procédé selon la revendication 1 de fabrication d'un bandage pneumatique (10), dans lequel un agent anti-adhésif n'est pas appliqué sur la région d'adhésion (40).
